# EUROPÄISCHE PATENTSCHRIFT

(11) **EP 1 738 567 B1**
(45) Veröffentlichungstag und Bekanntmachung des Hinweises auf die Patenterteilung: **15.06.2011**
(21) Anmeldenummer: 05738017.2
(22) Anmeldetag: 29.03.2005
(51) Int. Cl.: H04M 1/03

(54) **BRILLENGESTELL MIT INTEGRIERTEM AKUSTISCHEM KOMMUNIKATIONSSYSTEM ZUR KOMMUNIKATION MIT EINEM MOBILFUNKGERÄT UND ENTSPRECHENDES VERFAHREN**
GLASSES FRAME WITH INTEGRATED ACOUSTIC COMMUNICATION SYSTEM FOR COMMUNICATION WITH A MOBILE PHONE AND RESPECTIVE METHOD
MONTURE DE LUNETTES AVEC SYSTÈME DE COMMUNICATION ACOUSTIQUE INTÉGRÉ POUR COMMUNIQUER AVEC UN TÉLÉPHONE MOBILE ET MÉTHODE CORRESPONDANTE

(30) Priorität: 31.03.2004 EP 04101327
(43) Veröffentlichungstag der Anmeldung: 03.01.2007
(73) Patentinhaber: Swisscom AG, 3050 Bern (CH)
(72) Erfinder: RITTER, Rudolf, CH-3052 Zollikofen (CH); LAUPER, Eric, CH-3014 Bern (CH)
(74) Vertreter: BOVARD AG
(86) Internationale Anmeldenummer: PCT/EP2005/051425
(87) Internationale Veröffentlichungsnummer: WO 2005/094157

(56) Entgegenhaltungen:
- EP-A- 0 562 742
- WO-A-2004/016037
- DE-A1- 19 959 493
- GB-A- 2 377 581
- US-A- 5 483 599
- US-A- 5 682 210
- US-A- 5 903 397
- US-A1- 2002 197 961
- DATABASE INSPEC [Online] THE INSTITUTION OF ELECTRICAL ENGINEERS, STEVENAGE, GB; Juli 2002 (2002-07), NIEW J: "Surface mount microphone creates new options for manufacturers" XP002357137 Database accession no. 7382434 & European Electronics Engineer Setform Ltd UK, Juli 2002 (2002-07), Seiten 22-24,

## Beschreibung

Die vorliegende Erfindung betrifft ein Verfahren und ein System zur akustischen Kommunikation, wobei ein Brillengestell mindestens ein richtungsabhängiges Mikrophon zur Erfassung von Sprachsignalen eines Benutzers, sowie Kommunikationsmittel zur Signalübertragung zu externen elektronischen Einrichtungen umfasst. Insbesondere betrifft sie ein Kommunikationssystem, bei welchem die Richtungsabhängigkeit des mindestens einen Mikrophons dynamisch benutzerspezifisch anpassbar ist.

Die mobilen Kommunikationsendgeräte spielen in der heutigen Zeit eine immer wichtigere Rolle. Die neueren mobilen Kommunikationsendgeräte dienen heute nicht nur einer einfachen Sprach- oder Datenkommunikation, sondern verwandeln sich immer mehr in komplexe Multimediageräte, mittels welchen beispielsweise Audio- oder Videobroadcast empfangen, Spiele gespielt oder auf Informationen innerhalb von Netzwerken wie Internet oder Mobilfunknetzen zugegriffen werden kann. Die Steuerung dieser komplexen mobilen Kommunikationsendgeräte, insbesondere Selektion von verfügbaren Daten und/oder Datensätzen oder der Betriebsmodi, sowie Daten- und/oder Befehlseingabe erweist sich meistens als umständlich und ist oft mit Einsatz von teuren und unhandlichen Hilfsmittel, wie Tastatur, Schreibstift, Trackball, Touch-Screens, etc. verbunden. Auch ist es in diesem Zusammenhang unentbehrlich, das mobile Kommunikationsgerät jeweils in der Hand zu halten, was einen handfreien und bequemen Einsatz von modernen Kommunikationsendgeräte massiv einschränkt.

Im Stand der Technik sind daher bereits Lösungen bekannt, welche auf Spracherkennung basieren. Die Spracherkennung oder auch automatische Spracherkennung beschäftigt sich mit der Untersuchung und Entwicklung von Verfahren, die es Automaten wie Computern erlauben, gesprochene Sprache zu erkennen beziehungsweise in Zeichenfolgen umzuwandeln und zu verarbeiten. Mittlerweile wird Spracherkennung auch im technischen Einsatz verwendet, zum Beispiel in automatischen Dialogsystemen wie etwa einer Fahrplanauskunft. Überall dort, wo nur ein begrenzter Wortschatz verwendet wird, wird die automatische Spracherkennung mit Erfolg praktiziert. Bei der automatisierten Spracherkennung spielt jedoch die Qualität der akustischen Aufnahme eine entscheidende Rolle und daher ist es wesentlich, die Aufnahmequalität möglichst zu verbessern, damit eine signifikant höhere Erkennungsgenauigkeit erreicht werden kann.

Die Schriften WO 03/062906 und WO 02/086599 beschreiben beispielsweise eine Einrichtung, bei welchen Mikrophone und Miniaturlautsprecher an einem Brillengestell angeordnet werden. Das Brillengestell wird dann über eine Kabelverbindung mit einem externen elektronischen Gerät verbunden. Das Problem der vorgelegten Einrichtung ist jedoch die Schwierigkeit, für benutzerspezifische Klang- und Tonaufnahmen eine akzeptable Rauschunterdrückung zu erreichen und insbesondere Sprachbefehle eines Benutzers von Stimmen anderer, in der Nähe befindlicher Personen zu unterscheiden.

In der Schrift EP 0 219 026 B1 wird beschrieben, wie ein Hörgerät in ein Brillengestell eingebaut werden kann. Durch eine bestimmte räumliche Verteilung mehrerer Mikrophone am Brillengestell lässt sich sowohl ein Richt- als auch ein Ortungseffekt erreichen, der es dem Hörgeschädigten möglich machen soll, eine räumliche Orientierung betreffend ein akustisches Ereignis zu erhalten. Alle akustischen und elektronischen Bauelemente sind an der Brille untergebracht. Eine Sende- und/oder Empfangsverbindung zu externen elektronischen Einrichtungen ist nicht vorgesehen.

In der Offenlegungsschrift US 2002/0197961 A1 wird ein Brillengestell offenbart, in welches Mikrophone, Miniaturlautsprecher, Stromversorgung (Akkumulator) und Sender bzw. Empfänger für die Übertragung von Signalen zu einem Mobilfunkgerät oder sonstigen externen elektronischen Geräten eingebaut sind. Alternativ können die genannten Bauelemente auch in einem Clip untergebracht werden, der an dem Brillengestell befestigt und wieder entfernt werden kann oder an einem Hut oder ähnlichem auf dem Kopf getragenen Gegenstand. Die Mikrophone können auch an einem verstellbaren Arm angebracht werden. Bei einem Einsatz der zuletzt genannten Anordnung in einer Umgebung mit lauten und nicht konstanten Störgeräuschen ist jedoch trotzdem nicht gewährleistet, dass das Nutzsignal mit einem ausreichenden Pegel am Mikrophon anliegt.

Die internationale Anmeldung WO 2004/016037 beschreibt ein Verfahren zur Verbesserung der Sprachverständlichkeit und eine entsprechende Vorrichtung. Dabei handelt es sich um eine Brillenfassung, welche ein Mikrophon-Array, einen Lautsprecher und eine Signalaufbereitungseinrichtung umfasst. Diese Signalaufbereitungseinrichtung erhält die Signale vom Mikrophon-Array, reduziert die Menge an störenden Nebensignalen und leitet die so aufbereiteten Signale an die Lautsprecher oder ein externes elektronisches Gerät. Die Brillenfassung kann auch eine Mikrophonsteuerung umfassen, welche die Ausrichtung der Mikrophone so anpassen kann, dass eine bessere Signalqualität erreicht werden kann. Zur Signalaufbereitung können verschiedene Verfahren und Algorithmen verwendet werden, insbesondere die so genannte ANC (Active Noise Control) Technologie. Dennoch ist auch das beschriebene Beamforming-Verfahren nicht geeignet, die Umgebungsgeräusche und -störungen in jeder Situation effizient zu unterdrücken.

Es ist eine Aufgabe dieser Erfindung, ein neues System und ein neues Verfahren zur akustischen Kommunikation vorzuschlagen, welche die oben genannten Probleme des Standes der Technik nicht aufweisen. Insbesondere soll das System eine komfortable handfreie Benutzung von Mobilfunkgeräten, sowie eine verlässliche und bequeme Eingabe von Sprachbefehlen und interaktiver Sprachsteuerung im Zusammenhang mit IVR-Systemen (Interactive Voice Response) in geräuschvollen Umgebungen ermöglichen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass ein Brillengestell mindestens ein richtungsabhängiges Mikrophon zur Erfassung von Sprachsignalen eines Benutzers sowie Kommunikationsmittel zur Signalübertragung zu externen elektronischen Einrichtungen umfasst, und wobei die Richtungsabhängigkeit des mindestens einen Mikrophons mittels eines Steuerungsmoduls dynamisch benutzerspezifisch anpassbar ist, wobei das Steuerungsmodul Mittel umfasst, mittels welchen - basierend auf den von mindestens einem zweiten richtungsabhängigen Mikrophon erfassten Sprachsignalen - die Richtungsabhängigkeit des mindestens einen Mikrophons mittels eines Steuerungsmoduls dynamisch benutzerspezifisch anpassbar, und das mindestens eine erste richtungsabhängige Mikrophon ansteuerbar sind. Die Vorteile dieser Ausführungsvariante sind unter anderem, dass eine effektive Geräuschunterdrückung und damit eine wesentlich höhere Qualität der erfassten Sprachsignale für jeden einzelnen Benutzer möglich ist. Insbesondere zur Erkennung von Sprachbefehlen des Benutzers kann dies eine notwendige Voraussetzung sein. Weitere Vorteile sind die handfreie Eingabe von Sprachanwiesungen sowie die Tatsache, dass die Eingabevorrichtung kaum sichtbar ist, weil im Brillengestell integriert. Ausserdem hat diese Ausführungsvariante unter anderem den Vorteil, dass die Anpassung der Richtungsabhängigkeit der richtungsabhängigen Mikrophone in Funktion der von den anderen Mikrophonen erfassten Signale vorgenommen werden kann. Damit kann eine noch bessere benutzerspezifische Anpassung erreicht werden, welche in einer erhöhten Sprachqualität und besseren Voraussetzung für den Einsatz des erfindungsgemässen Systems und Verfahrens in Umgebungen mit hohen Störgeräuschen resultiert.

In einer weiteren Ausführungsvariante ist mindestens ein zweites richtungsabhängiges Mikrophon ein Körperschallmikrophon. Diese Ausführungsvariante hat unter anderem den Vorteil, dass die Sprachsignale, welche vom sprechenden Benutzer ausgesendet werden, nicht nur nach einer Ausbreitung in der Luft, sondern auch nach einer Ausbreitung im Körper des Benutzers aufgefangen werden können. Nach einer entsprechenden Aufbereitung und Verarbeitung kann dadurch eine weitere Verbesserung der Geräuschunterdrückung erreicht werden. Insbesondere kann mittels eines Körperschallmikrophons auch sehr einfach festgestellt werden, ob der Benutzer gerade spricht oder nicht, womit eine mögliche Verwechslung mit einem in der Nähe sprechenden weiteren Benutzer praktisch eliminiert werden kann. Zudem eignen sich die von einem Körperschallmikrophon erfassten Signale bestens dazu, vom Steuerungsmodul zur adaptiven benutzerspezifischen Anpassung der Richtungsabhängigkeit der anderen richtungsabhängigen Mikrophone verwendet zu werden. In einer wieder anderen Ausführungsvariante wird das von einem ersten richtungsabhängigen Mikrophon erfasste Signal mittels des von einem dritten Mikrophon erfassten Signals gefiltert. Diese Ausführungsvariante hat unter anderem den Vorteil, dass die Umgebungsgeräusche, welche von einem anderen Mikrophon erfasst werden, zur Filterung und Signalqualitätsverbesserung des vom ersten richtungsabhängigen Mikrophon erfassten Signals verwendet werden können. Dadurch werden die positiven Eigenschaften des richtungsabhängigen Mikrophons mit der positiven Eigenschaften einer Geräuschunterdrückung durch Filterung auf optimale Weise kombiniert, was zu einer noch besserer Sprachqualität führt.

In einer weiteren Ausführungsvariante ist das mindestens eine richtungsabhängige Mikrophon als ein Mikrophon-Array ausgeführt. Das mindestens eine Mikrophon-Array kann zum Beispiel vorteilhafterweise in MEMS-Technik ausgeführt sein. Diese Ausführungsvariante hat unter anderem den Vorteil, dass dadurch eine besonders effektive und intensive Richtwirkung erreicht wird. Durch den Einsatz von Mikrophongruppen können auch viele räumliche Eigenschaften der Schallwellen ausgenutzt werden, welche bei einem einfachen Mikrophon nicht verwertet werden können. Weitere Vorteile dieser Ausführungsvariante sind die viel niedrigeren Herstellungskosten und die hohe Integrationsrate, wodurch eine besonders kleine und kompakte Bauweise erreicht werden kann.

In einer anderen Ausführungsvariante umfasst die externe Einrichtung ein Mobilfunkgerät. Dabei kann das Mobilfunkgerät beispielsweise in das Brillengestell integriert sein oder als eigenständiges Gerät existieren. Diese Ausführungsvariante hat unter anderem den Vorteil, dass das erfindungsgemässe System und das erfindungsgemässe Verfahren für die Sprachkommunikation über ein Mobilfunknetz verwendet werden können. Ebenfalls können dadurch die Brillenträger mit einem oder mehreren am Mobilfunknetz verbundenen Servern über das Brillengestell kommunizieren oder akustische Anweisungen eingeben. Somit müssen die Brillenträger keine zusätzlichen Freisprecheinrichtungen benutzen, womit sie wesentlich günstiger und bequemer kommunizieren können.

In einer anderen Ausführungsvariante umfasst das Brillengestell Mittel für Retinal Scanning Display. Ein Retinal Scanning Display ist eine Anzeigevorrichtung, bei der ein Lichtstrahl direkt auf die Retina ins Auge projiziert wird. Durch eine entsprechende Lichtmodulation und schnelles Rastering des Lichtstrahls können ganze Bilder angezeigt werden. Das Brillengestell kann zudem weiter Mittel zur Erfassung der Blickrichtung umfassen. Diese Ausführungsvariante hat unter anderem den Vorteil, dass dadurch ein komplexes System aufgebaut werden kann, welcher es dem Benutzer ermöglicht, Informationen direkt sehen und hören zu können, ohne auf externe Ausgabevorrichtungen angewiesen zu sein. Gleichzeitig kann durch die Blickerfassung eine weitere Möglichkeit der Dateneingabe ins System integriert werden.

In einer weiteren Ausführungsvariante umfasst das System ein Spracherkennungsmodul zum Erfassen von Sprachbefehlen mittels des mindestens einen richtungsabhängigen Mikrophons. Diese Ausführungsvariante hat den Vorteil, dass mittels der Sprachbefehle einfach Informationen vom Benutzer gesteuert und/oder ausgewählt werden können. Weitere Vorteile sind ein geringer Stromverbrauch, weil alle Vorrichtungen im selben Gestell integriert sind.

In einer weiteren Ausführungsvariante umfasst das Kommunikationssystem Bluetooth- und/oder ZigBee- und/oder GSM- und/oder UMTS- und/oder WLAN-Schnittstellen. Diese Schnittstellen können zum Beispiel in das Kommunikationsendgerät und/oder in die Kommunikationsmittel des Brillengestells integriert sein. Dies hat unter anderem den Vorteil, dass mittels des Kommunikationssystems auf gängige Industriestandards zugegriffen werden kann.

An dieser Stelle soll festgehalten werden, dass sich die vorliegende Erfindung neben dem erfindungsgemässen System auch auf ein Verfahren zur akustischen Kommunikation bezieht.

Nachfolgend werden Ausführungsvarianten der vorliegenden Erfindung anhand von Beispielen beschrieben. Die Beispiele der Ausführungen werden durch folgende beigelegte Figur illustriert:
Figur 1 zeigt ein Blockdiagramm, welches schematisch ein erfindungsgemässes System und Verfahren zur akustischen Kommunikation illustriert.
Figur 2 zeigt eine Seitendarstellung eines Brillengestells, welches für die Durchführung des erfindungsgemässen Systems und Verfahrens nach Figur 1 verwendet werden kann.
Figur 3 zeigt ein Blockdiagramm, welches schematisch eine weitere Ausführungsform des erfindungsgemässen Systems und Verfahrens zur akustischen Kommunikation illustriert.
Figur 4 zeigt ein Blockdiagramm, welches schematisch die Struktur des erfindungsgemässen Systems zur akustischen Kommunikation nach Figur 1 illustriert.
Fig. 5 zeigt ein Blockdiagramm, welches schematisch die Struktur einer weiteren Ausführungsform des erfindungsgemässen Systems zur akustischen Kommunikation nach Figur 3 illustriert.
Fig. 6 zeigt eine Explosionsansicht der Knochen eines menschlichen Schädels, in welchem die ungefähre typische Position eines getragenen Brillengestells, welches für die Durchführung des erfindungsgemässen Systems und Verfahrens verwendet werden kann, dargestellt ist.

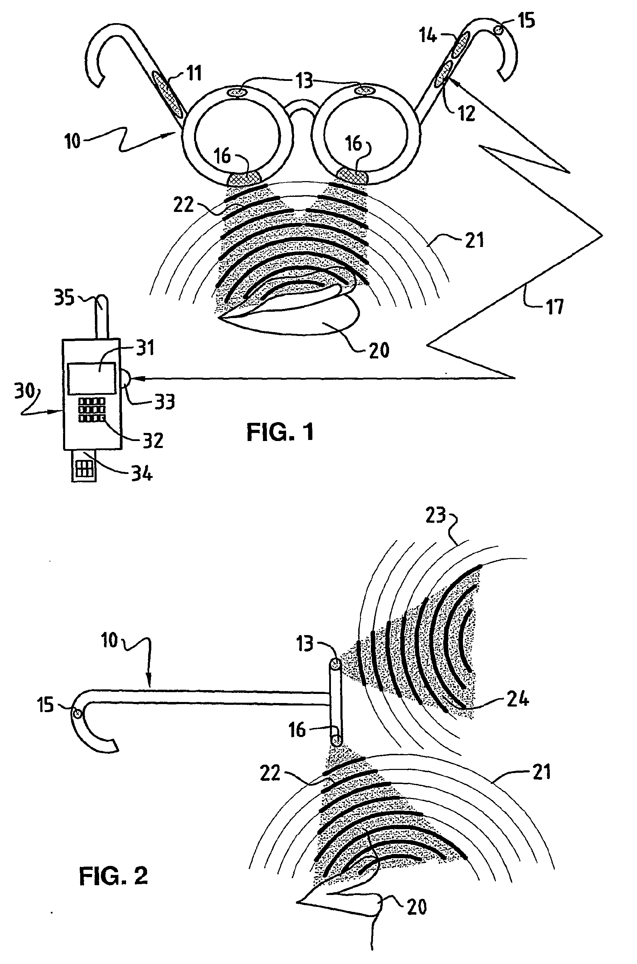

In der Figur 1 bezieht sich das Bezugszeichen 10 auf ein Brillengestell, beispielsweise ein Brillengestell mit Korrekturgläsem, welches von kurz- oder weitsichtigen Personen getragen werden, oder ein Sonnenbrillengestell mit verdunkelten Gläsern. Das Brillengestell 10 umfasst an einer Stelle, an welcher die vom Mund eines Benutzers 20 ausgehenden Schallwellen 21 erfasst werden können, mindestens einen richtungsabhängigen akustischen Sensor 16. Durch die Richtungsabhängigkeit des Sensors 16 können insbesondere die vom Mund eines Benutzers 20 in direkter Ausbreitungslinie ausgehenden Schallwellen 22 besonders gut erfasst werden Der richtungsabhängige akustische Sensor 16 kann zum Beispiel als ein einfaches Mikrophon, aber auch als eine Mikrophongruppe oder ein so genanntes Mikrophon-Array ausgeführt sein. Durch den Einsatz der Mikrophon-Arrays können die räumlichen Eigenschaften des Schallfeldes ausgenutzt und damit die Qualität respektive die Verständlichkeit des erfassten Signals wesentlich verbessert werden. Ebenfalls können am Brillengestell 10 mehrere solche Mikrophone oder Mikrophon-Arrays 16 angebracht werden, beispielsweise symmetrisch auf beiden Seiten des Brillengestells 10.

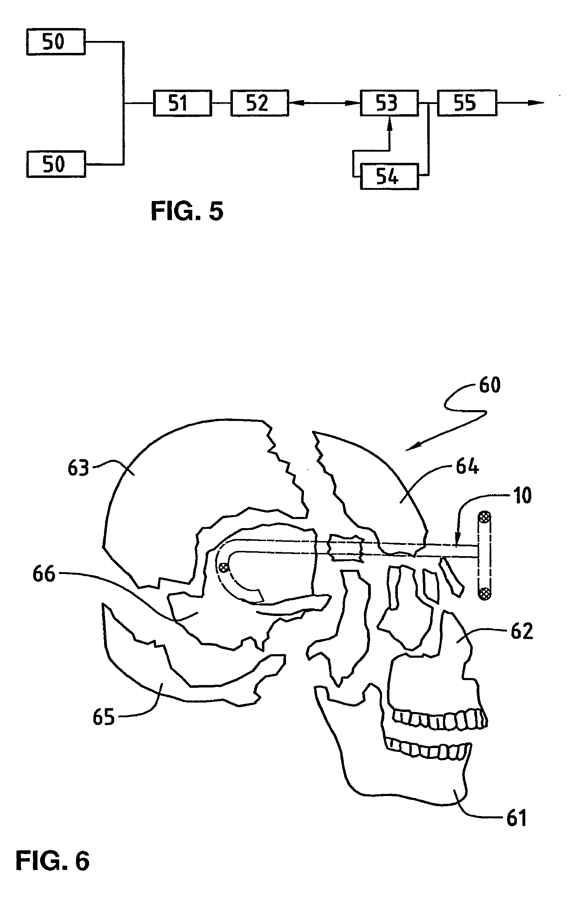

Wie in der Figur 1 oder in der Figur 2 weiter dargestellt ist, kann das Brillengestell 10 zudem einen oder mehrere weitere richtungsabhängige akustische Sensoren 15 umfassen. Der weitere richtungsabhängige akustische Sensor 15 wird an einer Stelle angebracht, an welcher von diesem richtungsabhängigen akustischen Sensor 15 die Körperschallsignale eines Benutzers gut erfasst werden können. Die Körperschallsignale entstehen so, dass beim Sprechen Schallwellen am Kehlkopf des Benutzers produziert werden, welche dann durch den Körper des Benutzers propagiert werden. Besonders günstige Stellen zur Aufnahme und Erfassung von Körperschallsignalen sind Schläfenbeine 66, welche sich an beiden Seiten des menschlichen Schädels 60 befinden, wie dargestellt in der Figur 6. Die Bügel eines Brillengestells 10 werden üblicherweise angrenzend an das Schläfenbein getragen, was zu einer hoher Qualität der erfassten Körperschallwellen beitragen kann. Der richtungsabhängige akustische Sensor 15 kann ebenfalls als ein einfaches Mikrophon oder als eine Mikrophongruppe oder ein so genanntes Mikrophon-Array ausgeführt sein.

In den Figuren 1 und 2 bezieht sich zudem das Bezugszeichen 13 auf einen oder mehrere weitere richtungsabhängige akustische Sensoren 13. Der eine oder mehrere weitere richtungsabhängige akustische Sensor 13 wird an einer Stelle des Brillengestells 10 angebracht, an welcher insbesondere die aus der Umgebung des Benutzers ausgehenden Nebengeräusche besonders gut erfasst werden können. Der richtungsabhängige akustische Sensor 13 kann ebenfalls als ein einfaches Mikrophon oder als ein Mikrophon-Array zur besseren Qualität des erfassten Signals ausgeführt werden und es können auch mehrere auf die Nebengeräusche ausgerichtete richtungsabhängige Mikrophone beziehungsweise Mikrophon-Arrays 13 am Brillengestell 10 angebracht werden.

Die Mikrophone beziehungsweise Mikrophon-Arrays 13, 15, 16 können insbesondere in der so genannten MEMS-Technologie (mikroelektromechanische Systeme) ausgeführt sein. Unter MEMS werden kleinste Chips verstanden, die eine gewisse Logik und mindestens gewisse bewegliche Teile aufweisen. MEMS sind daher in der Regel Prozessoren mit mechanischen Teilen, die sowohl Daten sammeln als auch aus diesen Informationen resultierende Handlungen ausführen können. So können durch den Einsatz der MEMS-Technologie sehr kleine Mikrophone oder Mikrophon-Arrays angefertigt werden, welche eine noch bessere Tonqualität bei gleichzeitiger kleiner Baugrösse zu erreichen vermögen, womit sie sich besonders gut für den Einbau in Brillengestelle 10 eignen.

In der Figur 1 bezieht sich das Bezugszeichen 11 auf ein Steuerungsmodul. Das Steuerungsmodul kann Signale von den richtungsabhängigen akustischen Sensoren 13,15,16 erhalten und auswerten. Das Steuerungsmodul 11 kann aber ebenfalls mit den richtungsabhängigen akustischen Sensoren 13, 15, 16 kommunizieren und sie ansteuern. Insbesondere können die richtungsabhängigen akustischen Sensoren 13, 15, 16 durch den Einsatz der MEMS-Technologie besonders einfach und ohne grossen Aufwand angesteuert werden. Dabei können zum Beispiel die Position, Empfindlichkeit und/oder Richtungsabhängigkeit der richtungsabhängigen akustischen Sensoren 13, 15, 16 beeinflusst werden. Beispielsweise kann das Steuerungsmodul 11 basierend auf Sprachsignalen, welche von einem richtungsabhängigen akustischen Sensor 13, 15, 16 erfasst werden, einen weiteren richtungsabhängigen akustischen Sensor 13, 15, 16 ansteuern. Im Brillengestell 10 und insbesondere im Steuerungsmodul 11 können alle für die Signalaufbereitung, -verstärkung und sonstige -verarbeitung erforderlichen Bauelemente untergebracht werden, beispielsweise Verstärker 46, 48, 51, Anpassungselemente 43, Reglerkreise 44, 54, oder Verzögerungselemente 47.

In einer Ausführungsvariante der erfindungsgemässen Lösung werden zum Beispiel beim sprechenden Benutzer Körperschallwellen am Kehlkopf produziert und durch den Körper propagiert. Diese Körperschallwellen beziehungsweise Sprachsignale werden auch bis zu den Schädelknochen und bis zum Schläfenbein propagiert, wo sie vom richtungsabhängigen akustischen Sensor 15 erfasst werden. Die erfassten Sprachsignale werden vom Steuerungsmodul 11 interpretiert und ausgewertet und basierend auf der Auswertung werden die richtungsabhängigen akustischen Sensoren 16 benutzerspezifisch angepasst. Insbesondere kann das Steuerungsmodul 11 die Position der in MEMS-Technologie ausgeführten richtungsabhängigen akustischen Sensoren 16 ändern, so dass sie der Physiognomie des Benutzers besser Rechnung tragen. Ebenfalls kann das Steuerungsmodul 11 die Empfindlichkeit der richtungsabhängigen akustischen Sensoren 16 benutzerspezifisch so ändern, dass sie beim Eintreffen der Körperschallwellen am Schläfenbein besonders empfindlich an die Sprachsignale reagieren, welche sich vom Mund des Benutzers 20 ausbreiten.

In einer weiteren Ausführungsvariante der erfindungsgemässen Lösung werden beim sprechenden Benutzer nicht nur Körperschallwellen sondern auch die aus der Umgebung stammenden Nebengeräusche von den richtungsabhängigen akustischen Sensoren 13 erfasst. Die von den ersten richtungsabhängigen akustischen Sensoren 15 erfassten Körperschallsignale und die von den zweiten richtungsabhängigen akustischen Sensoren 13 erfassten Umgebungsgeräuschsignale werden vom Steuerungsmodul 11 interpretiert und ausgewertet und basierend auf der Auswertung werden die richtungsabhängigen akustischen Sensoren 16 benutzerspezifisch angepasst. Insbesondere kann es vorkommen, dass bei konstant bleibenden Umgebungsgeräuschen eine adaptive bzw. dynamische benutzerspezifische Anpassung der Richtungsabhängigkeit des richtungsabhängigen akustischen Sensoren 16 nötig wird: der Benutzer könnte beispielsweise plötzlich leiser sprechen, weil er nun Themen behandelt, welche vertraulicher Natur sind und nicht von den sich in der Nähe befindenden Personen wahrgenommen werden. Also versteht man unter adaptiver benutzerspezifischen Anpassung eine dynamische Anpassung, bei welcher die Richtungsabhängigkeit der Mikrophone an optimale Werte dynamisch, beispielsweise durch den Einsatz von MEMS-Mikrophonen adaptiert wird.

Insbesondere ist das Brillengestell 10 auch mit einer physikalischen Netzwerkschnittstelle 12 ausgestattet, mittels welcher Sprach- und/oder Dateninformationen zwischen dem Brillengestell 10 und einem mobilen Kommunikationsendgerät 30 über den Kommunikationskanal 17 ausgetauscht werden können. Die Netzwerkschnittstelle 12 kann mehrere unterschiedliche Netzwerkstandards unterstützen, beispielsweise die unter den Namen Bluetooth oder ZigBee bekannte lokale drahtlose Netzwerkstandards, aber auch die GSM-(Global System for Mobile Communicaton), GPRS- (Generalised Packet Radio Service), UMTS- (Universal Mobile Telecommunications System), WLAN- (Wireless Local Area Network) 802.11, Infrarot- oder irgendeine andere kontaktlose Kommunikationstechnologie. Grundsätzlich könnte die Netzwerkschnittstelle 12 aber auch irgendeine kontaktbehaftete Schnittstelle sein, beispielsweise eine USB- oder eine Firewire-Schnittstelle oder eine Schnittstelle zu Ethernet, Token Ring oder irgendeinem anderen Wired LAN (Local Area Network). Die Schnittstelle kann natürlich nicht nur packet-switched Schnittstellen, wie sie Netzwerkprotokolle wie z.B. Ethernet oder Tokenring direkt benutzen, sondern auch circuit-switched Schnittstellen, die mittels Protokollen wie z.B. PPP (Point to Point Protocol), SLIP (Serial Line Internet Protocol) oder GPRS (Generalized Packet Radio Service) benutzt werden können, d.h. welche Schnittstellen z.B. keine Netzwerkadresse, wie eine MAC- oder eine DLC-Adresse besitzen. Grundsätzlich muss betont werden, dass das erfindungsgemässe System und/oder Verfahren nicht an einen spezifischen Netzwerkstandard gebunden ist, sofern die erfindungsgemässen Merkmale vorhanden sind, sondern können mit einem oder mehreren beliebigen Netzwerken realisiert werden, insbesondere auch indem die Sprach- und/oder Datenübertragung transparent zwischen den verschiedenen Kommunikationstechnologien umgeschaltet oder geroutet wird. In dem Brillengestell 10 können ausserdem weitere erforderlichen Bauelemente untergebracht werden, beispielsweise Lautsprecher und Stromversorgung.

In Figur 1 bezieht sich das Bezugszeichen 30 auf ein mobiles Kommunikationsendgerät oder ein beliebiges so genanntes Customer Premises Equipment (CPE). Das mobile Kommunikationsendgerät 30 kann irgend ein Mobilfunkgerät von irgendeinem Mobilfunknetzwerk sein; beispielsweise ist das Mobilfunkgerät ein GSM Gerät eines GSM Mobilfunknetzwerks, oder ein UMTS Gerät eines UMTS Netzwerks, oder ein Satelliten Gerät eines Satelliten Netzwerks. Das mobile Kommunikationsendgerät 30 kann aber grundsätzlich auch ein handelsüblicher Personal Computer (PC), ein tragbarer PC, ein Festnetztelefon, ein Ladegerät für ein Mobilfunkgerät, eine Spielstation oder irgend ein anderes Gerät mit elektronisch vernetzten Komponenten sein. Das mobile Kommunikationsendgerät 30 umfasst beispielsweise eine Eingabeeinheit 32 zur Eingabe von Datenelementen. Das mobile Kommunikationsendgerät 30 kann eine übliche Tastatur oder eine ähnliche Eingabevorrichtung nach Art der Mobilfunktelefone aufweisen, die beispielsweise aus Zifferntasten und Steuertasten besteht, wobei Ziffemtasten beispielsweise auf Buchstabeneingabe umschaltbar sind. Zum Zwecke der Berechtigung und Authentifizierung, beispielsweise bei einer Gebührenerfassung bei der Telekommunikation, enthält das mobile Kommunikationsendgerät 30 in der Regel ein entfernbares Identifizierungsmodul, beispielsweise eine SIM (Subscriber Identity Module) Karte 34, die hier unten am Endgerät 30 dargestellt ist und beim Betrieb im Inneren des mobilen Kommunikationsendgerätes mit Kontakten in Berührung steht. Das mobile Kommunikationsendgerät 30 kann zudem eine Anzeigevorrichtung 31 zur Darstellung von Datenelementen umfassen. Eine Antenne 35 dient in bekannter Weise zur Übermittlung von Daten über ein Telekommunikationsnetz, das in der Regel ein Mobilfunknetz ist, beispielsweise ein GSM (Global System for Mobile Communication) Netz, ein UMTS (Universal Mobile Telecommunication System) Netz oder ein WLAN (Wireless Local Area Network) Netz. Am mobilen Kommunikationsendgerät 30 ist beispielsweise eine kontaktlose Schnittstelle 33 angebracht, über welche Daten und Befehle von der kontaktlosen Schnittstelle 12 des Brillengestells 10 empfangen und gesendet werden können.

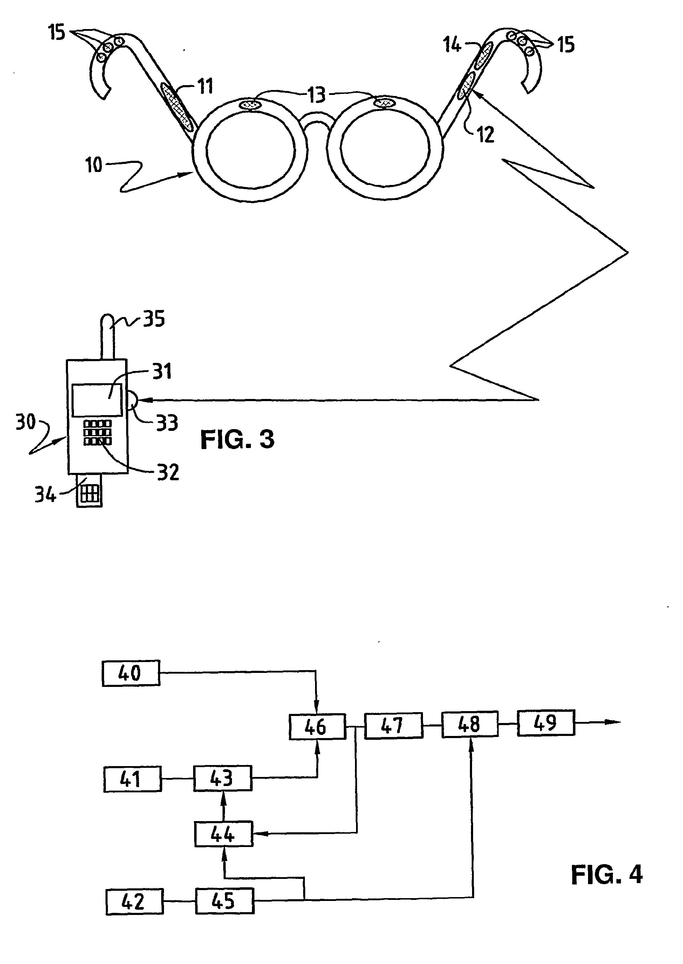

Die Struktur einer Ausführungsvariante des erfindungsgemässen Systems und des erfindungsgemässen Verfahrens wird in Figur 4 illustriert. Von den ersten richtungsabhängigen akustischen Sensoren 16 werden vor allem Sprachsignale aus der Mundgegend des Benutzers 22 empfangen, während die zweiten richtungsabhängigen akustischen Sensoren 13 vor allem auf die aus der Umgebung kommenden Nebengeräusche ausgerichtet sind. Die dritten richtungsabhängigen akustischen Sensoren 15 sind so eingestellt und positioniert, dass sie vor allem Sprachsignale aus dem Körperschall des Benutzers erfassen können. Die von den ersten und von den zweiten richtungsabhängigen akustischen Sensoren 13, 16 erfassten Sprachsignale werden von einem Signalanpassungsmodul 43 und einem Regelkreis 44 auf Minimum Nebengeräuschpegel am Ausgang des Differenzverstärkers 46 geregelt. Die von den dritten richtungsabhängigen akustischen Sensoren 15 erfassten Sprachsignale werden so vom Verstärkerregler 48 verwendet, dass im Fall "kein Körperschall" die Verstärkung des von den ersten richtungsabhängigen akustischen Sensoren 16 erfassten Sprachsignale nicht zu stark verstärkt werden. Im Fall "Körperschall vorhanden" wird jedoch der Verstärker so eingestellt, dass die von den ersten richtungsabhängigen akustischen Sensoren 16 erfassten Sprachsignale gegenüber den von den zweiten richtungsabhängigen akustischen Sensoren 13 erfassten Sprachsignalen verstärkt wird. Damit keine Verzerrungen durch Laufzeiten entstehen kann ein Signalverzögerungsmodul 47 vorgesehen werden.

In der Figur 3 ist eine weitere Ausführungsvariante des erfindungsgemässen Systems und des erfindungsgemässen Verfahrens illustriert. Das Bezugszeichen 10 bezieht sich wieder auf ein Brillengestell, welches einen oder mehrere richtungsabhängige akustische Sensoren 15 umfasst, welche an einer Stelle angebracht werden, an welcher von diesem richtungsabhängigen akustischen Sensor 15 die Körperschallsignale eines Benutzers gut erfasst werden können. Der richtungsabhängige akustische Sensor 15 kann ebenfalls als ein einfaches Mikrophon oder als eine Mikrophongruppe oder ein so genanntes Mikrophon-Array und/oder in MEMS-Technik ausgeführt sein. Die vom mindestens einem richtungsabhängigen akustischen Sensor 15, 50 erfassten Sprachsignale werden an ein Steuerungsmodul 11 geleitet. Wie in Figur 5 dargestellt, wird das von den richtungsabhängigen akustischen Sensoren 15 erfasste Sprachsignal von einem Verstärker 51 im Steuerungsmodul 11 verstärkt, bezüglich Pegel und Frequenz von einem Signalaufbereitungsmodul 52 und anschliessend von einem Referenz- und Reglerkreis 54 so aufbereitet, dass die erfassten Mikrofonsignale in der Charakteristik den von einem gewöhnlichen Mikrophon erfassten Sprachsignalen entsprechen. Anschliessend werden die Sprachsignale dem Audiopfad 53 vom mobilen Kommunikationsendgerät 30 zugefügt. Die Referenz für den Referenz- und Reglerkreis 54 werden beispielsweise im mobilen Kommunikationsendgerät 30 durch das Mikrofon des Gerätes für den jeweiligen Benutzer aufgenommen. Das Signalaufbereitungsmodul 52 sowie der Referenz- und Reglerkreis 54 können sowohl im Brillengestell 10 als auch im mobilen Kommunikationsendgerät angelegt werden.

Die Energiequelle zur Stromversorgung 14, zur Speisung des elektronischen Systems kann insbesondere über nicht dargestellte photovoltaische Zellen, die auf den Brillengläsern aufgedampft sind, erfolgen. Zudem kann sie aber über eine gewöhnliche Batterie erfolgen, welche im Brillengestell 10 integriert oder mit diesem verbunden ist.

## Patentansprüche

1. System zur akustischen Kommunikation, wobei ein Brillengestell (10) mindestens ein richtungsabhängiges Mikrophon (13, 15, 16) zur Erfassung von Sprachsignalen eines Benutzers (21) sowie Kommunikationsmittel (12) zur Signalübertragung zu externen elektronischen Einrichtungen (30) umfasst, und wobei die Richtungsabhängigkeit des mindestens einen Mikrophons (13, 15, 16) mittels eines Steuerungsmoduls (11) dynamisch benutzerspezifisch anpassbar ist, **dadurch gekennzeichnet,**
**dass** das Steuerungsmodul (11) Mittel umfasst, mittels welchen - basierend auf den von mindestens einem zweiten richtungsabhängigen Mikrophon (13, 15) erfassten Sprachsignalen - die Richtungsabhängigkeit des mindestens einen Mikrophons (13, 15, 16) mittels des Steuerungsmoduls (11) dynamisch benutzerspezifisch anpassbar, und das mindestens eine erste richtungsabhängige Mikrophon (13, 16) ansteuerbar ist.

2. System zur akustischen Kommunikation nach Anspruch 1, **dadurch gekennzeichnet, dass** das mindestens eine zweite richtungsabhängige Mikrophon (15) ein Körperschallmikrophon ist.

3. System zur akustischen Kommunikation nach Anspruch 1, **dadurch gekennzeichnet, dass** das von einem ersten richtungsabhängigen Mikrophon (16) erfasste Signal mittels des von einem dritten Mikrophon (13) erfassten Signals filterbar ist.

4. System zur akustischen Kommunikation nach einem der Ansprüche 1 bis 3, **dadurch gekennzeichnet, dass** ein Verstärker (48) mittels des von einem dritten Mikrofon (15) erfassten Signals regelbar ist.

5. System zur akustischen Kommunikation nach einem der Ansprüche 1 bis 4, **dadurch gekennzeichnet, dass** das von einem richtungsabhängigen Mikrophon (15) erfasste Signal basierend auf Referenzfilter aufbereitbar ist.

6. System zur akustischen Kommunikation nach einem der Ansprüche 1 bis 5, **dadurch gekennzeichnet, dass** das mindestens eine richtungsabhängige Mikrophon (13, 15, 16) als Mikrophon-Array ausgeführt ist.

7. System zur akustischen Kommunikation nach Anspruch 6, **dadurch gekennzeichnet, dass** das mindestens eine Mikrophon-Array in MEMS-Technik ausgeführt ist.

8. System zur akustischen Kommunikation nach einem der Ansprüche 1 bis 7, **dadurch gekennzeichnet, dass** die externe Vorrichtung (30) ein Mobilfunkgerät umfasst.

9. System zur akustischen Kommunikation nach einem der Ansprüche 1 bis 8, **dadurch gekennzeichnet, dass** das Brillengestell (10) Mittel für Retinal Scanning Display umfasst.

10. System zur akustischen Kommunikation nach Anspruch 9, **dadurch gekennzeichnet, dass** das Brillengestell (10) Mittel für die Erfassung der Blickrichtung umfasst.

11. System zur akustischen Kommunikation nach einem der Ansprüche 1 bis 10, **dadurch gekennzeichnet, dass** das System ein Spracherkennungsmodul zum Erfassen von Sprachbefehlen mittels des mindestens einen richtungsabhängigen Mikrophons (13, 15, 16) umfasst.

12. System zur akustischen Kommunikation nach einem der Ansprüche 1 bis 11, **dadurch gekennzeichnet, dass** das Kommunikationssystem Bluetooth- und/oder ZigBee- und/oder GSM- und/oder UMTS-Schnittstellen (12, 33) umfasst.

13. System zur akustischen Kommunikation nach einem der Ansprüche 1 bis 12, **dadurch gekennzeichnet, dass** das System photovoltaische Zellen für die Stromversorgung (14) umfasst.

14. Verfahren zur akustischen Kommunikation, wobei Sprachsignale eines Benutzers (21) von mindestens einem an einem Brillengestell (10) angebrachten richtungsabhängigen Mikrophon (13, 15, 16) erfasst und über eine drahtlose Schnittstelle (17) an eine externe elektronische Einrichtung (30) übertragen werden, wobei die Richtungsabhängigkeit des mindestens einen richtungsabhängigen Mikrophons (13, 15, 16) dynamisch benutzerspezifisch angepasst wird, **dadurch gekennzeichnet,**
**dass** Sprachsignale eines Benutzers mittels mindestens eines ersten richtungsabhängigen Mikrophons (13, 15) erfasst werden, und dass basierend auf den von mindestens einem zweiten richtungsabhängigen Mikrophon (13, 15) erfassten Sprachsignalen eines Benutzers (21) die Richtungsabhängigkeit des mindestens einen richtungsabhängigen Mikrophons (13, 15, 16) dynamisch benutzerspezifisch angepasst, und das mindestens eine erste richtungsabhängige Mikrophon (13, 16) angesteuert wird.

15. Verfahren zur akustischen Kommunikation nach Anspruch 14, **dadurch gekennzeichnet, dass** das mindestens eine zweite richtungsabhängige Mikrophon (15) als Körperschallmikrophon ausgeführt wird.

16. Verfahren zur akustischen Kommunikation nach Anspruch 14, **dadurch gekennzeichnet, dass** das von einem ersten richtungsabhängigen Mikrophon (16) erfasste Signal mittels des von einem dritten Mikrophon (13) erfassten Signals gefiltert wird.

17. Verfahren zur akustischen Kommunikation nach einem der Ansprüche 14 bis 16, **dadurch gekennzeichnet, dass** ein Verstärker (48) mittels des von einem dritten Mikrofon (15) erfassten Signals geregelt wird.

18. Verfahren zur akustischen Kommunikation nach einem der Ansprüche 14 bis 17, **dadurch gekennzeichnet, dass** das von einem richtungsabhängigen Mikrophon (15) erfasste Signal basierend auf Referenzfilter aufbereitet wird.

19. Verfahren zur akustischen Kommunikation nach einem der Ansprüche 14 bis 18, **dadurch gekennzeichnet, dass** das mindestens eine richtungsabhängige Mikrophon (13, 15, 16) als Mikrophon-Array ausgeführt wird.

20. Verfahren zur akustischen Kommunikation nach Anspruch 19, **dadurch gekennzeichnet, dass** das mindestens eine Mikrophon-Array in MEMS-Technik ausgeführt wird.

21. Verfahren zur akustischen Kommunikation nach einem der Ansprüche 14 bis 20, **dadurch gekennzeichnet, dass** die erfassten Signale (22, 24) an ein Mobilfunkgerät (30) übertragen werden.

22. Verfahren zur akustischen Kommunikation nach einem der Ansprüche 14 bis 21, **dadurch gekennzeichnet, dass** dem Benutzer mit einem Retinal Scanning Display Bilddaten auf die Netzhaut projiziert werden.

23. Verfahren zur akustischen Kommunikation nach Anspruch 22, **dadurch gekennzeichnet, dass** mittels eines Moduls die Blickrichtung des Benutzers erfasst wird.

24. Verfahren zur akustischen Kommunikation nach einem der Ansprüche 14 bis 23, **dadurch gekennzeichnet, dass** Sprachbefehle mittels eines Spracherkennungsmoduls erfasst werden.

25. Verfahren zur akustischen Kommunikation nach einem der Ansprüche 14 bis 24, **dadurch gekennzeichnet, dass** die erfassten Signale über eine Bluetooth- und/oder eine ZigBee- und/oder eine GSM- und/oder eine UMTS-Schnittstelle an die externe Einrichtung übertragen werden.

26. Verfahren zur akustischen Kommunikation nach einem der Ansprüche 14 bis 25, **dadurch gekennzeichnet, dass** die Stromversorgung (14) über photovoltaische Zellen versorgt wird.

## Claims

1. System for acoustical communication in which an eyeglass frame (10) comprises at least one directionally dependent microphone (13, 15, 16) for capturing voice signals of a user (21) as well as communication means (12) for signal transmission to external electronic devices (30), and the directional dependence of the at least one microphone (13, 15, 16) being user-specifically adjustable in a dynamic way by means of a control module (11), **characterised in that**
the control module (11) comprises means by means of which - based on the voice signals captured by at least one second directionally dependent microphone (13, 15) - the directional dependence of the at least one microphone (13, 15, 16) is user-specifically adaptable in a dynamic way by means of the control module (11), and the at least one first directionally dependent microphone (13, 16) is controllable.

2. System for acoustical communication according to claim 1, **characterised in that** the at least one second directionally dependent microphone (15) is a contact microphone.

3. System for acoustical communication according to claim 1, **characterised in that** the signal captured by a first directionally dependent microphone (16) is able to be filtered by means of the signal captured by a third microphone (13).

4. System for acoustical communication according to one of the claims 1 to 3, **characterised in that** an amplifier (48) is feedback-controllable by means of the signal captured by a third microphone (15).

5. System for acoustical communication according to one of the claims 1 to 4, **characterised in that** the signal captured by a directionally dependent microphone (15) is processable based on reference filters.

6. System for acoustical communication according to one of the claims 1 to 5, **characterised in that** the at least one directionally dependent microphone (13, 15, 16) is implemented as a microphone array.

7. System for acoustical communication according to claim 6, **characterised in that** the at least one microphone array is implemented in MEMS technology.

8. System for acoustical communication according to one of the claims 1 to 7, **characterised in that** the external device (30) comprises a mobile radio device.

9. System for acoustical communication according to one of the claims 1 to 8, **characterised in that** the eyeglass frame (10) comprises means for retinal scanning display.

10. System for acoustical communication according to claim 9, **characterised in that** the eyeglass frame (10) comprises means for capturing the direction of view.

11. System for acoustical communication according to one of the claims 1 to 10, **characterised in that** the system comprises a speech recognition module for capturing spoken commands by means of the at least one directionally dependent microphone (13, 15, 16).

12. System for acoustical communication according to one of the claims 1 to 11, **characterised in that** the communication system comprises Bluetooth and/or ZigBee and/or GSM and/or UMTS interfaces (12, 33).

13. System for acoustical communication according to one of the claims 1 to 12, **characterised in that** the system comprises photovoltaic cells for the power supply (14).

14. Method for acoustical communication, voice signals of a user (21) being captured by at least one directionally dependent microphone (13, 15, 16) installed on an eyeglass frame (10) and being transmitted via a wireless interface (17) to an external electronic device (30), the directional dependence of the at least one directionally dependent microphone (13, 15, 16) being user-specifically adapted in a dynamic way, **characterised**
**in that** voice signals of a user are captured by means of at least one first directionally dependent microphone (13, 15), and in that based on the voice signals of a user (21) captured by at least one second directionally dependent microphone (13, 15) the directional dependence of the at least one directionally dependent microphone (13, 15, 16) is user-specifically adjusted in a dynamic way, and the at least one first directionally dependent microphone (13, 16) is controlled.

15. Method for acoustical communication according to claim 14, **characterised in that** the at least one second directionally dependent microphone (15) is implemented as a contact microphone.

16. Method for acoustical communication according to claim 14, **characterised in that** the signal captured by a first directionally dependent microphone (16) is filtered by means of the signal captured by a third microphone (13).

17. Method for acoustical communication according to one of the claims 14 to 16, **characterised in that** an amplifier (48) is controlled by means of the signal captured by a third microphone (15).

18. Method for acoustical communication according to one of the claims 14 to 17, **characterised in that** the signal captured by a directionally dependent microphone (15) is processed based on reference filters.

19. Method for acoustical communication according to one of the claims 14 to 18, **characterised in that** the at least one directionally dependent microphone (13, 15, 16) is implemented as a microphone array.

20. Method for acoustical communication according to claim 19, **characterised in that** the at least one microphone array is implemented in MEMS technology.

21. Method for acoustical communication according to one of the claims 14 to 20, **characterised in that** the captured signals (22, 24) are transmitted to a mobile radio device (30).

22. Method for acoustical communication according to one of the claims 14 to 21, **characterised in that** the user has image data projected onto the retina using a retinal scanning display.

23. Method for acoustical communication according to claim 22, **characterised in that** the direction of view of the user is captured by means of a module.

24. Method for acoustical communication according to one of the claims 14 to 23, **characterised in that** spoken commands are captured by means of a speech recognition module.

25. Method for acoustical communication according to one of the claims 14 to 24, **characterised in that** the captured signals are transmitted to an external device via a Bluetooth and/or a ZigBee and/or a GSM and/or a UMTS interface.

26. Method for acoustical communication according to one of the claims 14 to 25, **characterised in that** the power supply (14) is provided through photovoltaic cells.

## Revendications

1. Système de communication acoustique, dans lequel une monture de lunettes (10) comprend au moins un microphone directionnellement dépendant (13, 15, 16) pour capter des signaux vocaux d'un utilisateur (21), ainsi qu'un moyen de communication (12) pour la transmission de signaux vers des dispositifs électroniques externes (30), et dans lequel la dépendance directionnelle dudit au moins un microphone (13, 15, 16) est susceptible d'être ajustée de manière dynamique et spécifique à certains utilisateurs par un module de commande (11),
**caractérisé en ce que**
ledit module de commande (11) comprend des moyens par lesquels - basés sur les signaux vocaux captés par au moins un second microphone directionnellement dépendant (13, 15) - la dépendance directionnelle dudit au moins un microphone (13, 15, 16) est susceptible d'être ajustée de manière dynamique et spécifique à certains utilisateurs par ledit module de commande (11), et ledit au moins un premier microphone directionnellement dépendant (13, 16) est susceptible d'être commandé.

2. Système de communication acoustique selon la revendication 1, **caractérisé en ce que** ledit au moins un second microphone directionnellement dépendant (15) est un microphone à bruit de structure.

3. Système de communication acoustique selon la revendication 1, **caractérisé en ce que** le signal capté par un premier microphone directionnellement dépendant (16) est susceptible d'être filtré par le signal capté par un troisième microphone (13).

4. Système de communication acoustique selon l'une quelconque des revendications 1 à 3, **caractérisé en ce qu'**un amplificateur (48) est susceptible d'être réglé par le signal capté par un troisième microphone (15).

5. Système de communication acoustique selon l'une quelconque des revendications 1 à 4, **caractérisé en ce que** le signal capté par un microphone directionnellement dépendant (15) est susceptible d'être traité basé sur des filtres de référence.

6. Système de communication acoustique selon l'une quelconque des revendications 1 à 5, **caractérisé en ce que** ledit au moins un microphone directionnellement dépendant (13, 15, 16) est réalisé en matrice de microphones.

7. Système de communication acoustique selon la revendication 6, **caractérisé en ce que** ladite au moins une matrice de microphones est réalisée en technologie MEMS.

8. Système de communication acoustique selon l'une quelconque des revendications 1 à 7, **caractérisé en ce que** ledit dispositif externe (30) comprend une unité mobile de radio.

9. Système de communication acoustique selon l'une quelconque des revendications 1 à 8, **caractérisé en ce que** ladite monture de lunettes (10) comprend des moyens pour un affichage par balayage de la rétine (RSD, Retinal Scanning Display).

10. Système de communication acoustique selon la revendication 9, **caractérisé en ce que** ladite monture de lunettes (10) comprend un moyen pour capter la direction de visée.

11. Système de communication acoustique selon l'une quelconque des revendications 1 à 10, **caractérisé en ce que** le système comprend un module de reconnaissance vocale pour capter des commandes orales par ledit au moins un microphone directionnellement dépendant (13, 15, 16).

12. Système de communication acoustique selon l'une quelconque des revendications 1 à 11, **caractérisé en ce que** le système de communication comprend des interfaces Bluetooth et/ou ZigBee et/ou GSM et/ou UMTS (12, 33).

13. Système de communication acoustique selon l'une quelconque des revendications 1 à 12, **caractérisé en ce que** le système comprend des cellules photovoltaiques pour l'alimentation en courant (14).

14. Méthode de communication acoustique, dans laquelle des signaux vocaux d'un utilisateur (21) sont captés par au moins un microphone directionnellement dépendant (13, 15, 16) installé sur une monture de lunettes (10) et sont transmis par une interface sans fil (17) vers un dispositif électronique externe (30), la dépendance directionnelle dudit au moins un microphone (13, 15, 16) étant ajustée de manière dynamique et spécifique à certains utilisateurs, **caractérisée**
**en ce que** des signaux vocaux d'un utilisateur sont captés par au moins un premier microphone directionnellement dépendant (13, 16), et en ce que, basé sur les signaux vocaux d'un utilisateur (21) captés par au moins un second microphone directionnellement dépendant (13, 15), la dépendance directionnelle dudit au moins un microphone directionnellement dépendant (13, 15, 16) est ajustée de manière dynamique et spécifique à certains utilisateurs, et ledit au moins un premier microphone directionnellement dépendant (13, 16) est commandé.

15. Méthode de communication acoustique selon la revendication 14, **caractérisée en ce que** ledit au moins un second microphone directionnellement dépendant (15) est réalisé comme microphone à bruit de structure.

16. Méthode de communication acoustique selon la revendication 14, **caractérisée en ce que** le signal capté par un premier microphone directionnellement dépendant (16) est filtré par le signal capté par un troisième microphone (13).

17. Méthode de communication acoustique selon l'une quelconque des revendications 14 à 16, **caractérisée en ce qu'**un amplificateur (48) est réglé par le signal capté par un troisième microphone (15).

18. Méthode de communication acoustique selon l'une quelconque des revendications 14 à 17, **caractérisée en ce que** le signal capté par un microphone directionnellement dépendant (15) est traité basé sur des filtres de référence.

19. Méthode de communication acoustique selon l'une quelconque des revendications 14 à 18, **caractérisée en ce que** ledit au moins un microphone directionnellement dépendant (13, 15, 16) est réalisé en matrice de microphones.

20. Méthode de communication acoustique selon la revendication 19, **caractérisée en ce que** ladite au moins une matrice de microphones est réalisée en technologie MEMS.

21. Méthode de communication acoustique selon l'une quelconque des revendications 14 à 20, **caractérisée en ce que** les signaux captés (22, 24) sont transmis à une unité mobile de radio (30).

22. Méthode de communication acoustique selon l'une quelconque des revendications 14 à 21, **caractérisée en ce que** l'utilisateur subit une projection de données d'image sur la rétine en utilisant un affichage par balayage de la rétine (RSD, Retinal Scanning Display).

23. Méthode de communication acoustique selon la revendication 22, **caractérisée en ce que** la direction de visée de l'utilisateur est captée par un module.

24. Méthode de communication acoustique selon l'une quelconque des revendications 14 à 23, **caractérisée en ce que** des commandes orales sont captées par un module de reconnaissance vocale.

25. Méthode de communication acoustique selon l'une quelconque des revendications 14 à 24, **caractérisée en ce que** les signaux captés sont transmis vers ledit dispositif externe par une interface Bluetooth et/ou ZigBee et/ou GSM et/ou UMTS.

26. Méthode de communication acoustique selon l'une quelconque des revendications 14 à 25, **caractérisée en ce que** l'alimentation en courant (14) est réalisée par des cellules photovoltaiques.
